(19)

Europäisches
Patentamt
European
Patent Office
Office européen
des brevets

(11) **EP 3 012 622 A1**

(12) **EUROPEAN PATENT APPLICATION**
published in accordance with Art. 153(4) EPC

(43) Date of publication:
**27.04.2016 Bulletin 2016/17**

(21) Application number: **14809582.1**

(22) Date of filing: **03.07.2014**

(51) Int Cl.:
***G01N 25/18*** (2006.01)

(86) International application number:
**PCT/JP2014/067805**

(87) International publication number:
**WO 2015/008632 (22.01.2015 Gazette 2015/03)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **17.07.2013 JP 2013148743**

(71) Applicant: **Bethel Co., Ltd.
Ishioka-shi, Ibaraki 315-0021 (JP)**

(72) Inventors:
• **HATORI Kimihito
Ishioka-shi
Ibaraki 315-0021 (JP)**

• **OTSUKI Tetsuya
Ishioka-shi
Ibaraki 315-0021 (JP)**
• **KATO Takeo
Ishioka-shi
Ibaraki 315-0021 (JP)**

(74) Representative: **Pitchford, James Edward
Mathys & Squire LLP
The Shard
32 London Bridge Street
London SE1 9SG (GB)**

(54) **THERMAL DIFFUSIVITY MEASUREMENT DEVICE**

(57)    In a periodic heating radiation temperature measuring technique thermophysical property measuring device, a thickness direction measurement error is prevented.

In a periodic heating radiation temperature measuring technique thermophysical property measuring device that is equipped a heating laser beam irradiator to irradiate laser beams periodically to a sample at a frequency f and an infrared light condenser to condense infrared light radiated from a certain point of the sample, wherein the heating laser beam irradiator and the infrared light condenser being arranged to face each other across the sample, and measures a thermal diffusivity based on a periodic temperature change of the sample, and an infrared fiber that guides infrared light condensed by the infrared light condenser up to a radiation thermometer; and a controller that measures a phase difference $\theta$ between a period of a temperature change of the radiation thermometer and a period of the heating laser beams, and calculates a thermal diffusivity based on the phase difference $\theta$ and the frequency f, wherein the heating laser beam irradiator includes a unit that performs irradiation with a irradiation area corresponding to a circle having a maximum diameter of 300 $\mu$m, and the infrared light condenser includes a condensing lens having a maximum diameter of 50 mm.

*FIG. 1*

## Description

TECHNICAL FIELD

The present invention relates to a thermal diffusivity measuring device using a periodic heating radiation temperature measuring technique.

BACKGROUND ART

In the past, a method and device of periodically heating a part of a sample, measuring a temperature of a portion at a certain distance from a heated position, and obtaining a thermal diffusivity based on a period of a temperature change in order to measure a thermal diffusivity of a material have been known.

Patent Literature 1 discloses a device and a measuring technique using heating of a sample by laser irradiation using an optical fiber with a lens function and temperature measurement by an infrared light detector, and particularly, discloses that heating is performed by circular laser beams having a diameter of about 5 mm for measurement in a thickness direction.

Further, in Patent Literature 2, a periodic heat temperature measuring technique thermophysical property measuring device that can reduce a device price by using an optical fiber with a lens function and be applied to various kinds of samples, and particularly, includes an optical fiber positioning means configured to vertically move the optical fiber from the sample and control a thermal dose per unit area for heating the surface of the sample in order to sufficiently cope with samples of various thicknesses and samples of various thermal diffusivities has been proposed.

CITATION LIST

PATENT LITERATURE

Patent Literature 1: JP 2011-185852 A
Patent Literature 2: JP 2009-139163 A

SUMMARY OF INVENTION

TECHNICAL PROBLEM

Commonly, in a thickness direction thermal diffusivity measuring device using a radiation thermometer, heating is often performed with a irradiation area in which a laser diameter is 1000 $\mu$m or larger. For example, a laser diameter of 5 mm has been proposed in Patent Literature 1. The reason is as follows. When laser beams are irradiated to a sample, heat is two-dimensionally transferred in an in-plane direction as well as a thickness direction. As an irradiation area (laser diameter) is small, heat that is two-dimensionally transferred is considered to be detected in a radiation thermometer, and thus it is considered to be difficult to accurately measure a thermal diffusivity in a thickness direction.

However, in order to obtain sufficient heating performance (capable of detecting) with a laser diameter of 5 mm as in Patent Literature 1, an expensive laser is required, and thus it is difficult to employ it due to a cost problem.

There is another problem. In the thermal diffusivity measuring method using the periodic heating radiation temperature measuring technique, a method of measuring a phase lag while changing a frequency of heating laser light and obtaining a thermal diffusivity based on the phase lag is used. Generally, as a frequency increases, a phase lag decreases and in theory linearly decreases with respect to a square root of an increasing frequency. A portion that decreases linearly can be used for a thermal diffusivity calculation as reliable data, but data before and after an inflection point is regarded as unreliable data and not employed. In the method of the related art, there is a problem in that an inflection point significantly depends on a laser diameter and thus data is unreliable.

There is still another problem. That is, the thermal diffusivity measuring device using the periodic heating radiation temperature measuring technique includes a laser irradiation (output system) connected to a computer and a temperature measuring/data processing system (input system) using a radiation thermometer, and a time lag corresponding to a processing period of time of a network or a computer occurs in the input system and the output system. For this reason, in samples having a short thermal diffusion time, the time lag has strong influence and causes a measurement error. The removal of the measurement error also becomes a problem.

SOLUTION TO PROBLEM

In light of the above problems, the inventors of the present invention have conducted a study on a lens diameter of a radiation thermometer and a laser diameter (an irradiation area).

In other words, in common thickness direction measurement, a large laser irradiation area is used so that heat transferred two-dimensionally is not transferred to a radiation thermometer, but to the contrary, a laser irradiation area is decreased (a laser diameter is decreased).

Further, in common thickness direction measurement, a lens diameter is reduced to be as small as possible according to a laser irradiation area, and a temperature measurement range is set to a irradiation portion, but to the contrary, a lens diameter is increased, and measurement noise is reduced.

Further, the inventors invented a thermal diffusivity calculation method in which a degree of a time lag or the like occurring in a material having a different thermal diffusion time is measured, and a time lag is considered.

ADVANTAGEOUS EFFECTS OF INVENTION

According to the present invention, it is possible to reduce noise occurring in a general thermal diffusivity measuring device configuration using a periodic heating radiation temperature measuring technique. Since it is possible to reduce noise, it does not depend on a measurer's measurement skill. In other words, in the past, an effort of reducing noise has been performed by a measurer's skill such as a measurement condition or the number of measurements, and how to evaluate measurement noise has depended on a measurer's subjectivity. However, according to the present invention, it is possible to reduce measurement noise itself. Thus, it is possible to obtain measurement data without depending on a measurer's measurement skill or subjectivity.

BRIEF DESCRIPTION OF DRAWINGS

Fig. 1 is a conceptual diagram illustrating a thermal diffusivity measuring device of the present invention.
Fig. 2 is a scatter diagram illustrating when measurement is performed with a detection lens diameter of 50 mm and a laser diameter of 1000 $\mu$m.
Fig. 3 is a scatter diagram illustrating a variation of a thermal diffusivity when measurement is performed with a detection lens diameter of 50 mm and a laser diameter of 150 $\mu$m.
Fig. 4 is a table illustrating an indication of a thermal diffusivity literature value ratio when a detection lens diameter and a laser diameter are changed.
Fig. 5 is a graph illustrating a phase lag when a laser diameter is changed.
Fig. 6 illustrates a thermal diffusivity and a thermal diffusivity literature value ratio according to a type of metal. A time lag is not considered.
Fig. 7 illustrates a thermal diffusivity and a thermal diffusivity literature value ratio according to a type of metal. A time lag is not considered. 14 $\mu$ seconds is considered as a time lag.
Fig. 8 illustrates an exemplary thickness correspondence k calculation position storage. A vertical axis represents a thickness of a sample, and a horizontal axis represents a square root of a frequency of applied laser.
Fig. 9 is a block diagram illustrating a thermal diffusivity measuring device according to the present invention.

DESCRIPTION OF EMBODIMENTS

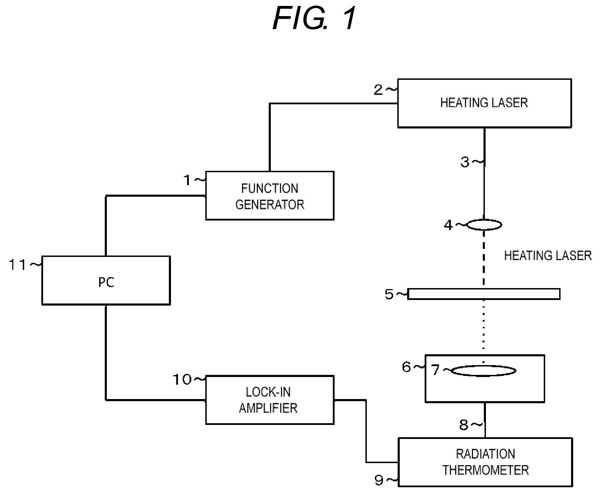

Hereinafter, embodiments of the present invention will be described with reference to the appended drawings. Fig. 1 is a conceptual diagram illustrating a thermal diffusivity measuring device of the present invention. Heating laser 2 modulates light intensity at a frequency f through a modulation signal output from a function generator 1. For example, the heating laser 2 is configured with a semiconductor laser having a wavelength of 808 nm and an output of 5 W. Heating laser beams output from the heating laser 2 pass through a condensing lens 4 and are irradiated onto a top surface of a sample 5. In the present invention, a thickness direction thermal diffusivity measurement error is reduced by adjusting a laser diameter through the condensing lens 4.

An infrared light condensing optical system 6 is installed at an opposite side to a side at which the heating laser beams are irradiated with the sample 5 interposed therebetween. An infrared fiber 8 is connected to a radiation thermometer 9. For example, the infrared light condensing optical system 6 is configured such that two plane-convex lenses formed of $CaF_2$ are combined while putting the convex sides back to back, and takes a function of condensing infrared rays radiated from a sample surface and inputting infrared rays to a middle infrared optical fiber.

The radiation thermometer 9 detects intensity of infrared light emitted from a region of a diameter of 250 $\mu$m of a lower surface of the sample 5. Here, as the infrared light condensing optical system 6, for example, a lens of a finite correction system using a material having excellent permeability for light having a wavelength of 1 $\mu$m to 10 $\mu$m such as $CaF_2$, Si, Ge, or ZnSe or two paraboloid mirrors coated with gold may be used. As the radiation thermometer, a radiation thermometer having InSb or the like as a detection element may be used. According to the present invention, a sufficient effect can be obtained even through a single element.

The infrared light detected by the radiation thermometer 9 is converted into an electrical signal, and a phase difference $\theta$ of a temperature change that oscillates at the frequency f is measured through a lock-in amplifier 10. Here, a value of $\theta$ is a phase difference that is bifurcated from the modulation signal used when the function generator 1 modulates the heating laser 2, input to the lock-in amplifier 10, and based on the modulation signal. A PC 11 records the phase difference $\theta$, for example, at intervals of f0.5 (at intervals of 0.5 Hz).

(Correction of time lag)

In the present invention, a time lag occurring in the lock-in amplifier 10 is corrected. A correction method is described. After a phase difference is measured through the lock-in amplifier, the PC 11 records the measured phase, the modulation frequency, and a phase difference between the two.

The PC 11 converts the phase difference into a time. The PC 11 includes a setting part for arbitrarily setting a time lag according to characteristics of the lock-in amplifier. After the time lag set through the setting part is corrected, the phase difference is recalculated, and recorded as a new phase difference θ.

(Calculation of inclination k according to thickness)

For example, the inclination k is obtained by the following method. The PC 11 obtains an inclination by a least-square technique based on 10 preceding and subsequent frequencies and phase differences for each frequency using a square root of a frequency and a phase difference θ as a horizontal axis and a vertical axis, respectively. In other words, an inclination of each frequency can be calculated. This inclination is compared with inclinations corresponding to the preceding and subsequent frequencies measured at intervals of f0.5. As a result of comparison, the smallest portion among portions that fall within an error of 5 % is employed as the inclination k.

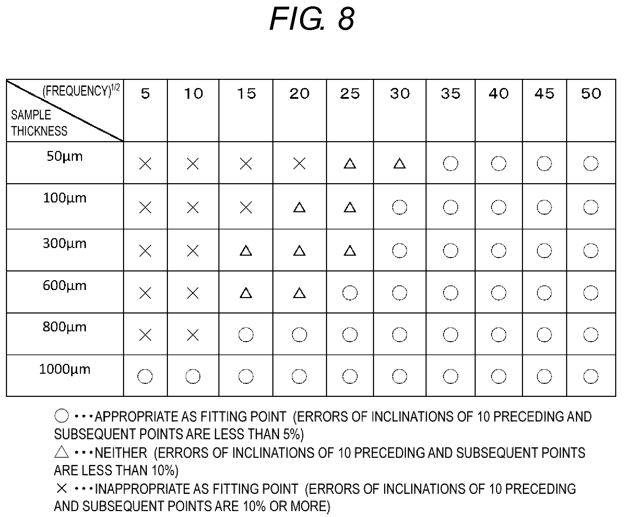

Such a calculation of k is performed since when it is plotted using a square root of a frequency and a phase difference θ as a horizontal axis and a vertical axis, if the thickness of a sample change, a linear region changes. According to an experiment, if the sample is thin, a range of the linear region changes such that a frequency increases (for example, see an experiment result of 50 μm of Fig. 8). In the case of a certain thickness or larger, regardless of a frequency, a difference in the inclinations by the least-square technique is small (for example, see an experiment result of 1000 μm of Fig. 8).

In the device according to the present invention, in light of the foregoing, it is possible to specify a frequency or a phase difference to be selected for calculating the inclination k. In other words, a frequency to be selected can be specified in advance by a thickness correspondence k calculation position storage as Fig. 8, and an inclination corresponding to an appropriate frequency can be employed as k according to a thickness input by a thickness inputter. The present invention is not limited to the example of Fig. 8. It may be stored whether or not it is appropriate in calculating k similarly using a phase difference as a horizontal axis.

EXAMPLE 1

When a thickness direction thermal diffusivity is measured, the surface of the sample 5 is heated by circular irradiation using the lens 4. The infrared light condensing optical system 6 is arranged to measure the temperature of the center of the heated circle with a sample having a thickness d. Thereafter, in each step in which the frequency f is changed, the phase difference θ in which the time lag is considered is measured, and the PC 11 plots and displays the phase difference θ for f0.5. An inclination k calculating means calculates the inclination k, and calculates a thermal diffusivity. At this time, a thickness direction thermal diffusivity α of the sample 5 is represented by the following formula. Here, d indicates a thickness of a sample.

[Math. 1]

$$\alpha = \pi d^2 \diagup k^2$$

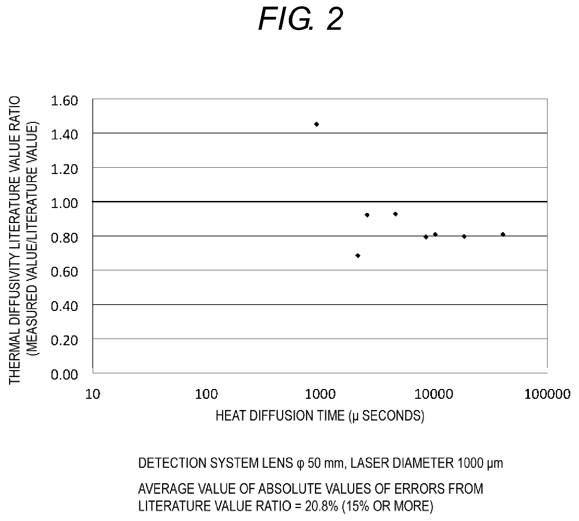

As described above, the device according to the present invention can measure the thickness direction thermal diffusivity of the sample. In Fig. 2, a horizontal axis represents a heat diffusion time (μ seconds), and a vertical axis represents a thermal diffusivity literature value ratio. It represents that as the vertical axis gets closer to 1, the measurement error decreases. The measurement was performed with the detection system lens of 50 mm and the laser diameter 1000 μm, and Fig. 2 was obtained. In order to quantify an error level, an average value of absolute values of errors from the literature values was obtained, that is, 20.8%.

The samples used in Fig. 2 are pure substances of various kinds of metal. Ag, Cu, Mo, Ta, Ti, and SUS are included. The sample has an arbitrary thickness of 50 μm to 1000 μm.

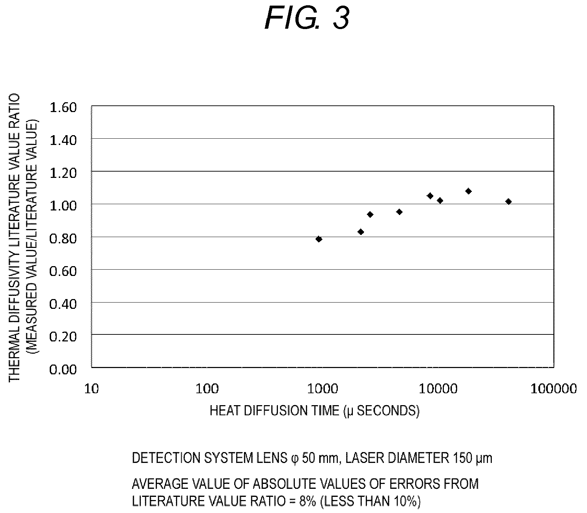

In Fig. 3, a vertical axis and a horizontal axis indicate the same as those in Fig. 2, the measurement was performed with the detection system lens of 50 mm and the laser diameter 150 μm. An average value of absolute values of errors from the literature values was obtained, that is, 8%.

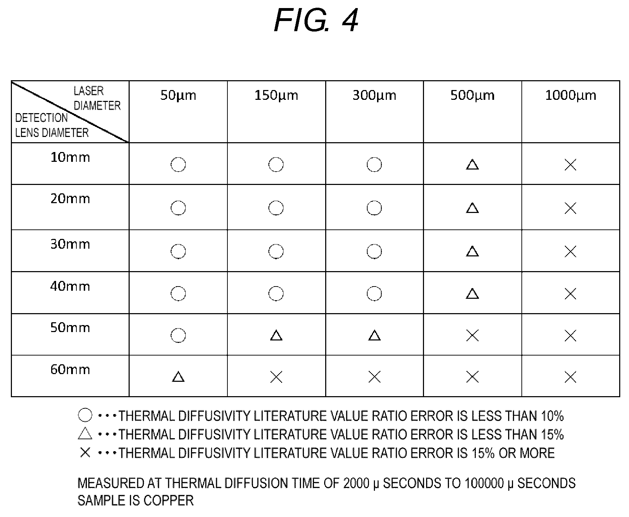

Fig. 4 illustrates a level of a thermal diffusivity literature value ratio error when a combination of the laser diameter and the detection lens diameter is changed. The thermal diffusivity literature value ratio error refers to an average value of absolute values of errors from a literature value. As illustrated in Fig. 4, when the laser diameter is equal to or less than 300 μm and the detection system lens diameter is equal to or less than 50 mm, a result in which the thermal diffusivity literature value ratio error is within 15% was obtained.

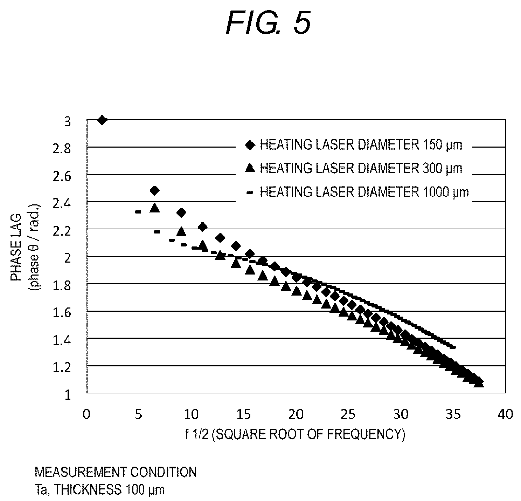

Fig. 5 is a plot diagram for calculating the inclination k. When there are a small number of errors, the inclination is linear, but when there are a large number of errors, the inclination is curved, and thus neighboring data is not employed. For this reason, non-curved data is desirable, but as illustrated in Fig. 5, an inflection point occurs at 1000 μm, a short straight line occurs before and after the inflection point, but since a portion good for measuring the inclination k is unclear, and thus it is difficult to employ it as data. Meanwhile, at 150 μm and 300 μm, a linear distribution is shown, and thus it is easy to calculate the inclination k.

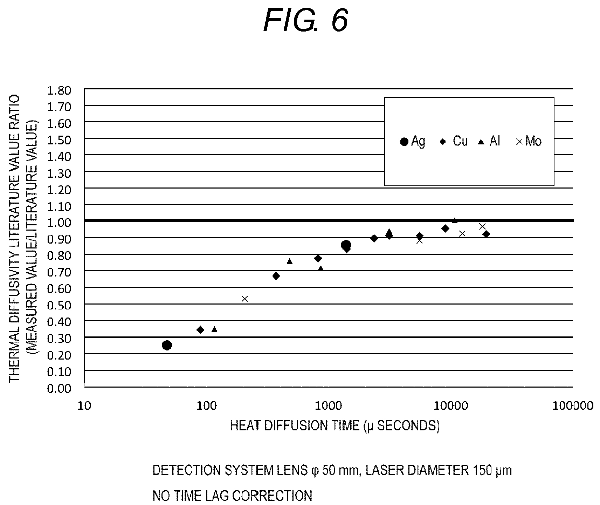

In Fig. 6, a horizontal axis represents a thermal diffusion time (μ seconds), and a vertical axis represents a thermal diffusivity literature value ratio, similarly to Figs. 2 and 3. The measurement sample and the thickness are the same as those in Fig. 2. It represents that the vertical axis get closer to 1, the measurement error decreases. The measurement was performed with the detection system lens of 50 mm and the laser diameter 150 μm while changing metal to be measured, and Fig. 6 was obtained.

In Fig. 6, a time lag was not considered. Thus, it is understood that as the thickness of the sample decreases (as the thermal diffusion time decreases), the influence of the time lag increases.

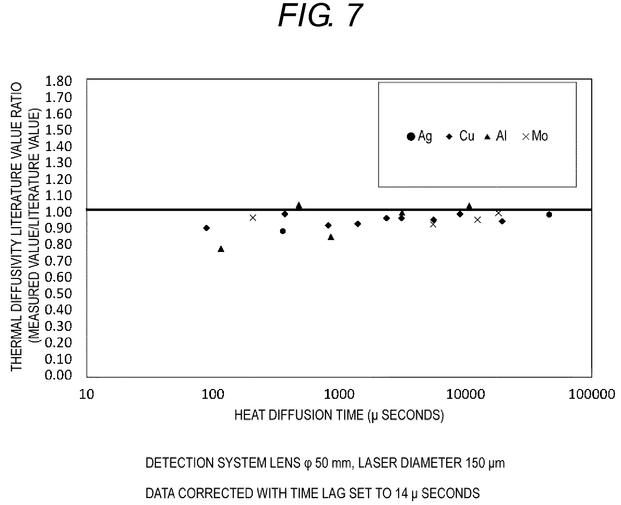

In Fig. 7, a vertical axis and a horizontal axis indicate the same as those in Fig. 6, but the measurement was performed with a time lag set to 14 $\mu$ seconds. It is understood that the measurement error according to the thermal diffusion time was decreased.

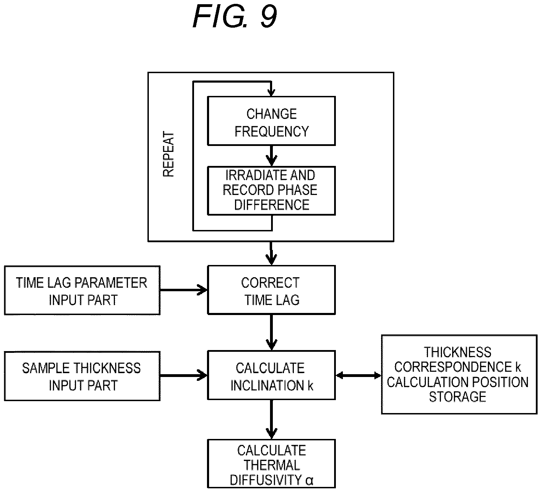

Fig. 8 illustrates an exemplary thickness correspondence k calculation position storage represented by a flowchart of Fig. 9. A vertical axis represents a thickness of a sample, and a horizontal axis represents a square root of a frequency of applied laser. In the thickness correspondence k calculation position storage means, the horizontal axis may represent a phase difference. It is because it is possible to determine whether not it is appropriate in calculating k similarly even using a phase difference.

Fig. 9 is a flowchart of a calculation means. The PC 11 records an irradiation frequency and a phase difference for each frequency while changing a frequency. After the recording ends, time lag correction in which a time lag parameter is considered is performed. The correction is performed by the above-described method.

The PC 11 calculates the inclination k based on a thickness input from a sample thickness input part. In other words, a phase difference corresponding to an input thickness is read based on a frequency stored in the thickness correspondence storage device, and the inclination is calculated as k by performing the least-square technique on 10 points before and after the thickness correspondence frequency.

INDUSTRIAL APPLICABILITY

The present invention can be used to measure thermophysical properties of materials widely used in leading-edge industries.

REFERENCE SIGNS LIST

1 Function generator
2 Heating laser
3 Optical fiber
4 Condensing lens
5 Sample
6 Infrared light condensing optical system
7 Condensing lens
8 Infrared fiber
9 Radiation thermometer
10 Lock-in amplifier
11 PC

**Claims**

1.  A thermal diffusivity measuring device, comprising:

    in a periodic heating radiation temperature measuring technique thermophysical property measuring device that is equipped a heating laser beam irradiator to irradiate laser beams periodically to a sample at a frequency f and an infrared light condenser to condense infrared light radiated from a certain point of the sample, wherein the heating laser beam irradiator and the infrared light condenser being arranged to face each other across the sample, and measures a thermal diffusivity based on a periodic temperature change of the sample, and
    an infrared fiber that guides infrared light condensed by the infrared light condenser up to a radiation thermometer; and
    a controller that measures a phase difference $\theta$ between a period of a temperature change of the radiation thermometer and a period of the heating laser beams, and calculates a thermal diffusivity based on the phase difference $\theta$ and the frequency f,
    wherein the heating laser beam irradiator includes a unit that performs irradiation with a irradiation area corresponding to a circle having a maximum diameter of 300 $\mu$m, and
    the infrared light condenser includes a condensing lens having a maximum diameter of 50 mm.

2.  The thermal diffusivity measuring device according to claim 1, further comprising,
    an inputter that inputs a time lag parameter,
    wherein when the controller that calculates the thermal diffusivity calculates the phase difference $\theta$, the thermal diffusivity is calculated in view of the time lag parameter input through the inputter.

3.  The thermal diffusivity measuring device according to claim 1 or 2, further comprising,
    an inputter that inputs a thickness of the sample,
    wherein the controller that calculates the thermal diffusivity calculates the thermal diffusivity based on the input thickness.

# *FIG. 1*

# FIG. 2

DETECTION SYSTEM LENS φ 50 mm, LASER DIAMETER 1000 μm

AVERAGE VALUE OF ABSOLUTE VALUES OF ERRORS FROM
LITERATURE VALUE RATIO = 20.8% (15% OR MORE)

*FIG. 3*

DETECTION SYSTEM LENS φ 50 mm, LASER DIAMETER 150 μm

AVERAGE VALUE OF ABSOLUTE VALUES OF ERRORS FROM
LITERATURE VALUE RATIO = 8% (LESS THAN 10%)

# FIG. 4

| LASER DIAMETER / DETECTION LENS DIAMETER | 50μm | 150μm | 300μm | 500μm | 1000μm |
|---|---|---|---|---|---|
| 10mm | ○ | ○ | ○ | △ | ✕ |
| 20mm | ○ | ○ | ○ | △ | ✕ |
| 30mm | ○ | ○ | ○ | △ | ✕ |
| 40mm | ○ | ○ | ○ | △ | ✕ |
| 50mm | ○ | △ | △ | ✕ | ✕ |
| 60mm | △ | ✕ | ✕ | ✕ | ✕ |

○ ・・・THERMAL DIFFUSIVITY LITERATURE VALUE RATIO ERROR IS LESS THAN 10%
△ ・・・THERMAL DIFFUSIVITY LITERATURE VALUE RATIO ERROR IS LESS THAN 15%
✕ ・・・THERMAL DIFFUSIVITY LITERATURE VALUE RATIO ERROR IS 15% OR MORE

MEASURED AT THERMAL DIFFUSION TIME OF 2000 μ SECONDS TO 100000 μ SECONDS
SAMPLE IS COPPER

## FIG. 5

MEASUREMENT CONDITION
Ta, THICKNESS 100 μm

## FIG. 6

DETECTION SYSTEM LENS φ 50 mm, LASER DIAMETER 150 μm

NO TIME LAG CORRECTION

# FIG. 7

DETECTION SYSTEM LENS φ 50 mm, LASER DIAMETER 150 μm

DATA CORRECTED WITH TIME LAG SET TO 14 μ SECONDS

# FIG. 8

| (FREQUENCY)$^{1/2}$ SAMPLE THICKNESS | 5 | 10 | 15 | 20 | 25 | 30 | 35 | 40 | 45 | 50 |
|---|---|---|---|---|---|---|---|---|---|---|
| 50μm | × | × | × | × | △ | △ | ○ | ○ | ○ | ○ |
| 100μm | × | × | × | △ | △ | ○ | ○ | ○ | ○ | ○ |
| 300μm | × | × | △ | △ | △ | ○ | ○ | ○ | ○ | ○ |
| 600μm | × | × | △ | △ | ○ | ○ | ○ | ○ | ○ | ○ |
| 800μm | × | × | ○ | ○ | ○ | ○ | ○ | ○ | ○ | ○ |
| 1000μm | ○ | ○ | ○ | ○ | ○ | ○ | ○ | ○ | ○ | ○ |

○ ···APPROPRIATE AS FITTING POINT (ERRORS OF INCLINATIONS OF 10 PRECEDING AND SUBSEQUENT POINTS ARE LESS THAN 5%)

△ ···NEITHER (ERRORS OF INCLINATIONS OF 10 PRECEDING AND SUBSEQUENT POINTS ARE LESS THAN 10%)

× ···INAPPROPRIATE AS FITTING POINT (ERRORS OF INCLINATIONS OF 10 PRECEDING AND SUBSEQUENT POINTS ARE 10% OR MORE)

# FIG. 9

```
┌─────────────────────────────────────────────┐
│        ┌──────────────────────────┐          │
│        │  ┌──────────────────────┐ │          │
│ R      │  │       CHANGE         │ │          │
│ E      │  │     FREQUENCY        │ │          │
│ P      │  └──────────────────────┘ │          │
│ E      │           │               │          │
│ A      │  ┌──────────────────────┐ │          │
│ T      │  │   IRRADIATE AND      │ │          │
│        │  │  RECORD PHASE        │ │          │
│        │  │   DIFFERENCE         │ │          │
│        │  └──────────────────────┘ │          │
└─────────────────────────────────────────────┘
```

┌──────────────────────┐        ┌──────────────────┐
│  TIME LAG PARAMETER   │   →    │     CORRECT      │
│     INPUT PART        │        │    TIME LAG      │
└──────────────────────┘        └──────────────────┘

┌──────────────────────┐        ┌──────────────────┐        ┌─────────────────────────────┐
│   SAMPLE THICKNESS    │   →    │    CALCULATE     │   ↔    │        THICKNESS            │
│     INPUT PART        │        │   INCLINATION k  │        │   CORRESPONDENCE k          │
└──────────────────────┘        └──────────────────┘        │  CALCULATION POSITION       │
                                                             │        STORAGE              │
                                                             └─────────────────────────────┘

                                ┌──────────────────┐
                                │    CALCULATE     │
                                │     THERMAL      │
                                │  DIFFUSIVITY α   │
                                └──────────────────┘

## INTERNATIONAL SEARCH REPORT

| | International application No. |
|---|---|
| | PCT/JP2014/067805 |

| A. CLASSIFICATION OF SUBJECT MATTER |
|---|
| *G01N25/18(2006.01)i* |
| According to International Patent Classification (IPC) or to both national classification and IPC |

| B. FIELDS SEARCHED |
|---|
| Minimum documentation searched (classification system followed by classification symbols) |
| G01N25/00-25/72 |

| Documentation searched other than minimum documentation to the extent that such documents are included in the fields searched |
|---|
| Jitsuyo Shinan Koho       1922-1996   Jitsuyo Shinan Toroku Koho   1996-2014 |
| Kokai Jitsuyo Shinan Koho   1971-2014   Toroku Jitsuyo Shinan Koho   1994-2014 |

| Electronic data base consulted during the international search (name of data base and, where practicable, search terms used) |
|---|
| JSTPlus/JMEDPlus/JST7580(JDreamIII) |

### C. DOCUMENTS CONSIDERED TO BE RELEVANT

| Category* | Citation of document, with indication, where appropriate, of the relevant passages | Relevant to claim No. |
|---|---|---|
| Y | JP 2011-185852 A (National Institute of Advanced Industrial Science and Technology), 22 September 2011 (22.09.2011), claims 1, 2; paragraph [0010]; fig. 1 (Family: none) | 1-3 |
| Y | JP 2010-169453 A (YGK Corp.), 05 August 2010 (05.08.2010), paragraph [0032] (Family: none) | 1-3 |
| Y | JP 6-221913 A (Hamamatsu Photonics Kabushiki Kaisha), 12 August 1994 (12.08.1994), paragraph [0098] & US 5477051 A          & EP 592200 A1 & DE 69313768 C | 2 |

| ☒ Further documents are listed in the continuation of Box C. | ☐ See patent family annex. |
|---|---|

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| 03 October, 2014 (03.10.14) | 14 October, 2014 (14.10.14) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

| International application No. |
|---|
| PCT/JP2014/067805 |

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2005-91119 A  (Ricoh Co., Ltd.), 07 April 2005 (07.04.2005), paragraph [0025] (Family: none) | 3 |
| A | Shun NAKAYAMA, Wataru NAKANO, Masahide YOKOKURA, Genzo MATSUI, Kimihito HATORI, Tetsuya OTSUKI, Takashi YAGI, Hiromichi OTA, "Spot Shuki Kanetsuho ni yoru Banjo Shiryo no Laser-kei Oyobi Kando Bunpu o Koryo shita Netsu Kakusanritsu Sokuteiho", The 33rd Japan Symposium on Thermophysical Properties Koen Ronbunshu, 03 October 2012 (03.10.2012), pages 164 to 166 | 1-3 |
| A | JP 3-156351 A  (Mitsui Toatsu Chemicals, Inc.), 04 July 1991 (04.07.1991), page 6, lower right column, lines 16 to 20 & US 5080495 A          & EP 419873 A2 & DE 69029076 C          & KR 10-1992-0007197 B | 1-3 |
| A | JP 2009-139163 A  (Bethel Co., Ltd.), 25 June 2009 (25.06.2009), paragraph [0041] (Family: none) | 1-3 |

Form PCT/ISA/210 (continuation of second sheet) (July 2009)

## REFERENCES CITED IN THE DESCRIPTION

**Patent documents cited in the description**

- JP 2011185852 A
- JP 2009139163 A